Europäisches Patentamt

European Patent Office

Office européen des brevets

(19)

(11) Publication number: **0 065 500**
**A1**

## (12) EUROPEAN PATENT APPLICATION

(21) Application number: 82830125.9

(22) Date of filing: 10.05.82

(51) Int. Cl.³: **A 01 D 43/02**, A 01 D 43/10

(30) Priority: 14.05.81 IT 2170181

(43) Date of publication of application: 24.11.82
Bulletin 82/47

(84) Designated Contracting States: **AT CH DE FR GB LI NL**

(71) Applicant: **Premoli, Luigi, Corso Monforte, 16,
I-20100 Milano (IT)**

(72) Inventor: **Premoli, Luigi, Corso Monforte, 16,
I-20100 Milano (IT)**

(74) Representative: **Cicogna, Franco, Ufficio Internazionale
Brevetti Dott.Prof. Franco Cicogna Via Visconti di
Modrone, 14/A, I-20122 - Milano (IT)**

(54) **Improvements in and/or related to the apparatus effective to be associated to the rotating disk of mowing machines for spreading the cut grass.**

(57) The machine comprises at least a grass spreading rotor, including a spider of substantially rod shaped elements (12) so designed and arranged as to operate by the ends thereof defining the rotor perimeter just above the back surface of the rotating disks (20), to pick up the cut grass and selectively throw the latter in such a way as to spread it on the ground in a selective and rational way, which operation may be combined with the so-called conditioning of the cut grass in order to facilitate and speed up the drying thereof.

EP 0 065 500 A1

ACTORUM AG

The present invention relates to an
an improvement in and/or related to the agricultural
machines provided for processing grass and /or
other vegetable cut material, such as rye and the
like, which vegetable material will be thereinafter
called "grass", in order to provide for the drying
of the latter on the ground.

It should be noted that in the following
discussion the improved apparatus or machine will
be indicated by the term "grass spreader", according
to the main operative feature thereof.

These grass spreader machines are well known;
in particular one thereof has been already disclosed
in a copending italian patent Application in the
name of the same Applicant and filed on May 14,1961.

More specifically the apparatus or machine
of the mentioned patent Application comprised a
grass spreading rotor assembly so arranged and
operated as to cyclically engage and throw, by
the ends of the substantially rod-like radially
extending component elements thereof, the cut grass
located on the ground in order to spread said grass,
by projecting it in a tangential direction with
respect to the engagement zone of the rod-like

0065500

elements with the average trajectory of the cut grass flow.

While the mentioned apparatus has been generally satisfactory, it was affected by the drawback that the grass spreading rotor assembly was to be critically assembled and operated in such a way as to skim the ground, in order to carry out the mentioned operation of cyclically engaging and throwing the cut grass.

In a further italian patent Application, filed on September 11, 1981 (filing number 23931 A/81) by the same Applicant the cut grass spreading apparatus has been further improved with respect to the operation thereof.

This improvement related to structural and operative means effective to provide the apparatus with the capacity of carrying out the so-called "conditioning" of the cut grass, in order to speed up the drying process thereof.

According to an important feature of the improvements of the mentioned patent Application N°23931 A/81 the cutting assembly rotating disks comprised an annular arrangement of cutting lugs and were located at the bottom of a frustum of cone shaped small height structure, intervening in the rotating movement of the cutting disk, thereto

a strong axle was associated (more specifically an axle for each rotating disk and generally two

or possibly more disks),which axle comprised both the supporting and operating means for said rotating disks.

As a further main feature the apparatus of said patent Application N° 23931 A/81 also comprised rotor members suitably arranged in the

frame of the apparatus and comprising a plurality of substantially rod shaped members,radially extending and resiliently coupled to the related hubs,which rods were effective to skim,with a suitable axial clearance,the top surface of the mentioned frustum conic portions of the disks, in such a way as to pick up the cut grass located above said portion.

Also this machine has provided a satisfactory performance;however it was structurally rather

complex and,in particular,it required a critical arrangement of the rotating disks thereof.

Thus in the light of the above mentioned

drawbacks of the cited grass spreading apparatus, the task of the present invention is that of provid-

ing a cut grass spreading apparatus or machine
effective to carry out a rational and selective
spreading on the ground of the cut grass and also
effective to carry out,if desired,the so-called
conditioning of said grass in order to speed up
the drying process thereof.

Within the scope of this task,it is a
main object of the present invention to provide
such a grass spreading apparatus or machine
effective to be easily associated with a mowing
machine,of the rotating disk type,in turn
towed and operated by an agricultural tractor
of suitable driving power and also effective to
provide the power for operating said apparatus.

According to one aspect of the present
invention the thereinabove mentioned task and
object,as well as yet other objects which will
become more apparent hereinafter are achieved
by an improved apparatus effective to be associated
to the rotating disk mowing machines for spreading the cut grass in a rational and selective
way,characterized in that it comprises,in combination

with a grass spreading rotor including a spider of essentially rod shaped members,and preferably effective to operate in such a way as to provide in association with the grass spreading operation a grass conditioning operation,means for selectively controlling the component members of said apparatus,said component members and,in particular, said rotor being powered by mechanical power derived from the engine of the tractor therewith said apparatus is associated,either hydraulically or oleodynamically.

These and other characteristics of the apparatus according to the present invention will become more apparent,jointly to other merely structural and mechanical features thereof,from the following detailed description,with reference to the accompanying drawing which,for understanding purposes should be compared with the disclosures and drawings of the thereinabove mentioned Italian copending patent Applications N° 21,701 filed on May 14,1961 and N° 23,931 filed on September 11,1961.

in the drawing, where the components of the apparatus have been illustrated on a reduced scale and essentially schematically since they are well known to those skilled in the art:

fig.1 essentially corresponds to fig.1A of the mentioned italian copending patent Application filed on September 11,1901;

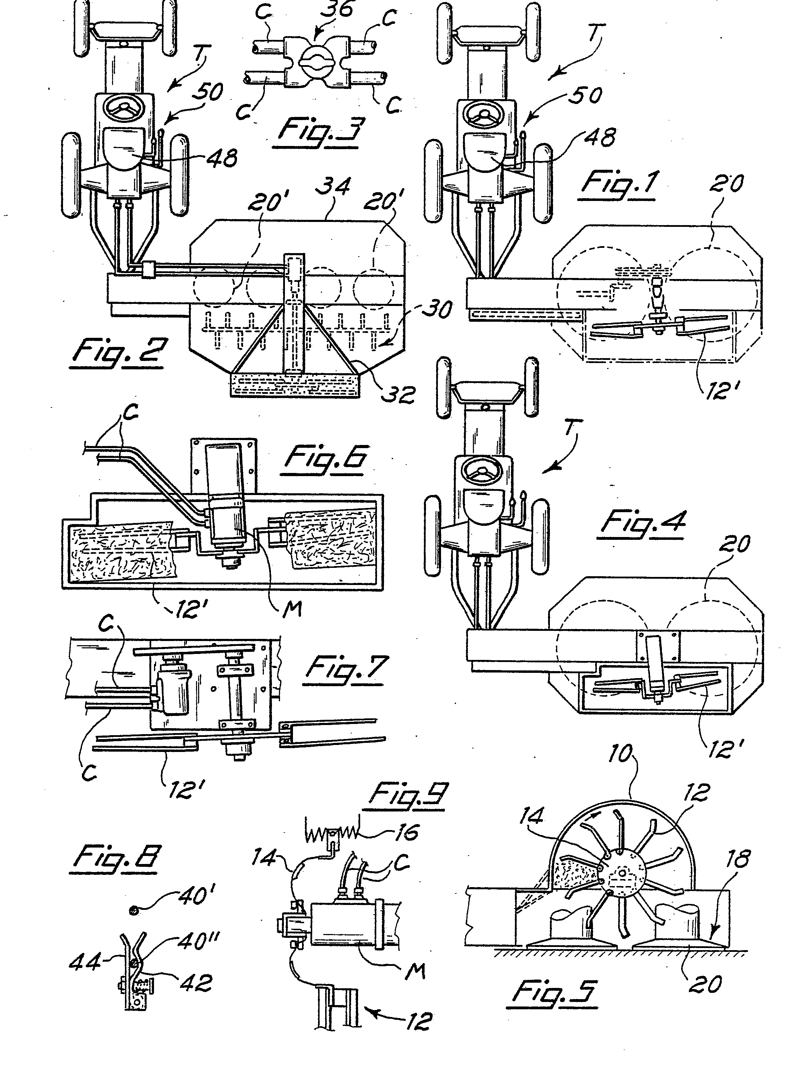

fig.2 practically illustrates the extension of the apparatus of fig.1, with a greater number of rotating disks(corresponding to the reference number 16 of the fig.1A of the mentioned italian patent Application filed on September 11,1981) and with the addition of a grass conditioning system. In this connection reference is herein made to the mentioned italian patent Application N° 23,931, and more specifically to fig.5 thereof;

fig.3 schematically illustrates a device for limiting the oil inlet and, more specifically, a tap which, as it is closed, allows for the oil supplied by the oleodynamic source(which is generally present in the differential gear assembly of the tractor) to directly pass to the oleodynamic motor, in general of the orbital type. As, on the

0065500

contrary, the tap is fully opened, the oil is recirculated, that is it does not arrive at the hydraulic motor. It should also be noted that fig.3 also illustrates, in a partial way, the starting inlet and outlet portions of the ducts or the hydraulic circuit;

fig.4 corresponds to fig.1A of the mentioned italian copending patent Application filed on September 11,1981, where at 16a have been indicated the outlines 82 of the grass cutting disks 16a(disclosed in the last lines of the page 10 of that same Application);

fig.5 corresponds, on a reduced scale, to fig.7A of the mentioned Italian Patent Application filed on September 11,1981;

fig.6 partially corresponds to fig.5A of that same Application and which fig.5A illustrated the rotating components of fig.7A skimming the frustum of cone shaped top space 82 of the rotating disks 16a;

fig.7 corresponds only with respect to the elements 24a and 25a of the grass spreading rotor, generally illustrated in fig.3A, and with the addition

or the oleodynamic motor and the end portions

of inlet and recirculating ducts or the oil

circuit;

fig.8 illustrates on a reduced scale and schematically the engagement and disengagement positions of a lever,as conventionally provided on the agricultural tractors,at a position on one side of the tractor driver.More specifically fig.8 illustrates,at the top thereof,the disengaged position wherein the oil supplied by the hydraulic pump is stopped and available for operating the tractor rising system,driven by means of a further lever,not shown;at the engagement position,shown at the bottom,the lever is held by suitable resilient latching means in such a way as to allow for the oil supplied by the hydraulic pump to pass to the orbital hydraulic motor;

fig.9 illustrates,on an enlarged scale, the oleodynamic motor,with the mentioned end

portions of the oil circuit ducts,to show the centered positioning on the apparatus assembly

between the ring arrangement of the operating elements and the structure therewith said motor

is associated.

With reference to the figures of the
drawing, it should be noted that in the following
description will be omitted the functional and
structural details of those parts described and
illustrated by the Applicant in his mentioned
italian copending patent applications filed
respectively on may and september 1981, since the
mentioned applications are herein incorporated by
reference.

Accordingly the following description will
disclose only the main units pertaining to the
present invention.

In the drawing the reference character T
generally indicates an agricultural tractor, of
known type, and having a power sufficient to assure
both the driving thereof and the towing necessary
for carrying out the agricultural working
operations, as well as a spare power effective to
be supplied, through a known oleodynamic pump,
to the systems for rising and lowering the ground
processing apparatus, such as a plough and the like.

Said spare power to be supplied to the tractor

0065500

by oleodynamic means has to be sufficient, in
the tractors associated to the improved
apparatus, to supply oleodynamic motors which, in
turn, supply power, through suitable circuits,
to a motor preferably though not limitatively
of the orbital type, to the rotors and operating
means associated to said apparatus which are
described in a more detailed way in the mentioned copending applications.

Since the instant apparatus is coupled
to the tractor in a shiftable and replaceable
way, the hydraulic circuits are at least partially
formed by flexible ducts and hoses, effective to
resist against the operating pressures, and
comprise fittings and quick connection joints,
for a quick engagement and disengagement, in order
to assure the circuit continuity.

In turn the mentioned circuit is of the
closed type, for recirculating the oil(that is the
medium for applying the oleodynamic pressure);
these ducts and the circuit components have been
partially indicated in the figures of the drawing
and indicated, where they are shown, by the letter C, independently from the fact that they are
inlet or return ducts, since these details
pertain to the known prior art.

Considering the average requirements
for operation of the agricultural tractors,
and more specifically the power requirements
for the several uses and applications of the
associated apparatus it is provided that, in
the application range related to the applications
of the present invention, tractors will be
advantageously used having a power of at least
60HP and a weight of the order of 3,000 Kg.

Likewise any specific descriptions of
the pumps and motors pertaining to the hydraulic
circuit thereto also pertain the oil recovering
and recirculating reservoirs will be omitted, since
these means and components are generally provided
on a tractor and structurally associated to the
differential gear of the tractor itself.

According to a further advantageous
characteristic of the invention the mechanical
power source, that is the hydraulic motor, preferably
of the orbital type, is located in the apparatus

0065500

assembly in a well centered way, for an optimal weight distributing.

Said hydraulic motor has been generally indicated at m in several figures and it has been schematically reproduced, by omitting the constructional details thereof.

There is advantageously exploited the presence, which is well known, of bearings spaced on the shaft(not shown) of the hydraulic motor M, which is advantageously located as it is shown in fig.6 and, in a more detailed way, in fig.9 in order to use the projecting ends of said shaft for supporting the grass spreading rotors, which are characteristic of the present invention.

These rotors, which are described in a more detailed way in the mentioned italian copending patent application filed on September 1981(see in particular fig.7A of the mentioned application which has been reproduced, on a reduced scale, in fig.5 of the accompanying drawing) are suitably protected by a shield or protecting member 10, for example made of a perforated metal sheet; and they comprise a plurality of grass spreading rod shaped elements 12. These elements extend from a disk hub 14, for example in a resilient way, the coupling

being obtained in this case for example by means of needle or coil spring 16 (fig.9).

The mentioned rod shaped members may be of the multiple type as it is schematically shown at 12' in figs.1,4,6 and 9(in a partial way).

As it is illustrated in the mentioned italian copending Applications, the grass spreading rotors comprising said elements 12 are so arranged in the apparatus in such a way as to operate above

the flat frustum or cone shaped surfaces 1o of

grass cutting disks 20(the outlines thereof are

illustrated in figs.1,3 and 4,fig.2 illustrating the provision of four grass cutting disks 20' and of a grass conditioning assembly 30).in that same fig.2 there is also illustrated,by way of example, a structure 32 for directionally stiffening the

structural frame to be applied to the grass cutting machine,or rotating grass cutting machine,and being

indicated at 34.

The detail of fig.3 schematically illustrates a tap 36 effective to selectively allow for the oil

to be circulated through the hydraulic circuit as

it was thereinabove illustrated.

Considering now the gear of fig.2,it comprises
a lever,provided with a suitable handle,and the
cross-section thereof has been indicated at 40',
in the disengaged position,and at 40",in an engaged
position between suitable resilient shoes,in particular
a spring biassed shoe 42 cooperating with a rigid
countershoe 44.Obviously these components may be
structurally and/or operatively different,provided
that they are suitable to assure the following
operation.

Since in the middle power agricultural tractors
a single oleodynamic pump is provided(only the
large weight and power tractors being provided with
two pumps),the pump has to operate both the rising
assembly and the hydraulic motor operating the
grass spreading rotor.

As the grass cutting operation is carried out,
the operator operates the lever 40',40" in order to
lower the rising assembly of the agricultural
apparatus,and specifically,in the considered case,
of the grass spreading apparatus.

As the end of the alternating paths is reached, generally at the field end, the operator operates the lever to put it at the starting position and

engage the rising assembly actuating lever, according

to a well known sequence. These operations are

carried out by the operator who, as it is conventional, has at disposal two adjoining controlling levers, on a side of the seat 4o(figs.1 and 2, therein the

two adjoining controlling levers have been schematically illustrated at the position indicated by the arrow 50).

As the operator, at the end of a portion of the alternating path, has to carry out a reversing operation in order to cut the grass again, said lever is brought to the position 40" and engaged between the holding means 42,44 in order to operate again the hydraulic motor M and hence

again rotate the grass spreading rotor.

While the improved apparatus according to the present invention has been thereinabove illustrated and described only by way of an indica-

tive and not limitative example and only to show its main characteristics, it should be noted

0065500

that it is susceptible to several modifications

anu variations ialling within its spirit and scope,as it is aefined in the accompanying

claims.

0065500

## C L A I M S

1- Improvements in and/or related to the apparatus effective to be associated to the rotating disk mowing machines for spreading the cut grass in a rational and selective way, characterized in that they comprise, in combination with a grass spreading rotor including a spider of essentially rod shaped members (12), and preferably effective to operate in such a way as to provide in association with the grass spreading operation a grass conditioning operation, means for selectively controlling the component members of said apparatus, said component members and, in particular, said rotor being powered by mechanical power derived from the engine of the tractor therewith said apparatus is associated, hydraulically or oleodynamically.

2- An improved apparatus, according to claim 1, effective to be associated for operating with a tractor comprising at least a hydraulic pump, characterized in that it comprises, in an assembly including a frame, at least a grass spreading rotor and coupling ducts of a hydraulic motor (M), in particular of the orbital type, coupled to said grass spreading rotor, and a hydraulic circuit for applying to said motor (M) oleodynamic power as derived · from said pump.

3- An improved apparatus according to claims 1 and 2, characterized in that said hydraulic circuit comprises at least partially flexible ducts or pipes (C) in order to allow for said apparatus to assume several positions with respect to the oleodynamic power source as provided on and in said tractor.

4- An improved apparatus according to claims 1 to 3, characterized in that said ducts or pipes comprise quick coupling and disconnecting means, effective to allow for said apparatus to be replaced by another similarly operated apparatus.

5- An improved apparatus according to one or more of claims 1 to 4, characterized in that said hydraulic circuit comprises valve means effective to be selectively operated by said tractor driver to transfer at least a portion of the power hydraulically transmitted to the hydromechanical system, as notoriously associated to an agricultural tractor, included for rising purposes in the agricultural machines for association with said tractor, and to respectively send the power not used for rising purposes to the hydraulic motor (M) operating the grass spreading apparatus rotor.

6- An improved apparatus according to claim 5, characterized in that it is so designed and arranged as to be operated by the lever means (40',40") on said tractor, in order to obtain said selections of the controls and metering of the oleodynamic power.

7- An improved apparatus according to one or more of claims 1 to 6, characterized in that it comprises a hydraulic motor (of the oleodynamic type) so arranged as to be able of assuring a proper distribution of the heavier components and of the stresses acting on the apparatus.

8- An improved apparatus according to claim 7, characterized in that the end portions of said hydraulic motor shaft are directly used for supporting cantilever wise, at a small distance from said shaft bearings, the operating components of the grass spreading rotor.

0065500

9- An improved apparatus, according to any preceding claims 1 to 8, characterized in that the operating parts of said apparatus are mounted on and supported by a frame including structural means (braces) for directionally coupling said apparatus with respect to structural parts associated with said tractor.

10-An improved apparatus according to one or more of the preceding claims 1 to 9, if and where they are compatible, characterized in that it comprises at least a grass spreading rotor and operating means of equivalent type to those disclosed and illustrated in the mentioned Italian Patent Applications filed on May 14, 1981 and September 11, 1981, respectively at the numbers 21701 A/81 and 23931 A/81.

Fig.3 · Fig.1 · Fig.2 · Fig.6 · Fig.7 · Fig.4 · Fig.8 · Fig.9 · Fig.5

0065500

European Patent
Office

**EUROPEAN SEARCH REPORT**

0065500

Application number

EP 82 83 0125

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-C- 352 933 (WENDELER) *Page 2, lines 38-76* | 1-7 | A 01 D 43/02 A 01 D 43/10 |
| Y | FR-A-2 282 216 (SODIA) *Page 2, line 29 - page 3, line 17* | 1-7 | |
| Y | GB-A-1 322 165 (NATIONAL RESEARCH DEVELOPMENT CORPORATION) *Page 4, lines 14-20* | 1-7 | |
| A | FR-A-2 272 589 (MULTINORM) *Page 3, line 31 - page 4, line 2* | 1-7 | |
| A | FR-A-2 210 089 (FFSA) *Page 2, lines 20-25, page 3, lines 23-26; figure 2* | 1 | TECHNICAL FIELDS SEARCHED (Int. Cl. ³) |
| A | DE-A-2 804 543 (STRAUB) *Page 5, lines 5-17; figure 1* | 1 | A 01 D |

The present search report has been drawn up for all claims

| Place of search | Date of completion of the search | Examiner |
|---|---|---|
| THE HAGUE | 21-07-1982 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82